# EUROPEAN PATENT SPECIFICATION

(11) **EP 1 101 346 B1**
(45) Date of publication and mention of the grant of the patent: **29.05.2013**
(21) Application number: 99929555.3
(22) Date of filing: 02.07.1999
(51) Int. Cl.: H04M 3/51, H04M 3/42

(54) **METHOD OF HANDLING A CALL DIRECTED TO A CUSTOMER SERVICES RESOURCE**
VERFAHREN ZUM BEHANDELN VON ANRUFEN DIE ZU EINEM KUNDENDIENSTBETRIEB ADDRESSIERT SIND
PROCEDE DE TRAITEMENT D'APPEL DESTINE A UNE RESSOURCE DE SERVICE A LA CLIENTELE

(30) Priority: 03.07.1998 GB 9814504
(43) Date of publication of application: 23.05.2001
(73) Proprietor: FRANCE TELECOM, 75015 Paris (FR)
(72) Inventor: PARSONS, Roger, Orange Pers. Com. Serv. Ltd., Almondsbury Park, Bristol BS12 4QJ (GB)
(74) Representative: Thiel, Frédéric
(86) International application number: PCT/GB1999/002124
(87) International publication number: WO 2000/002368

(56) References cited:
- EP-A- 0 821 510
- EP-A1- 0 647 076
- WO-A-97/10667
- WO-A-98/21905
- WO-A-98/28923
- WO-A2-98/25387

## Description

This invention relates to a method of handling a call from a subscriber in a telecommunications network, the call being directed to a customer services resource in the telecommunications network. The invention relates in particular, but not exclusively, to a method of handling calls to a call centre in a mobile communications network. The invention also relates to an apparatus for operating an automatic call distributor used in a telecommunications network, in particular but not exclusively a mobile communications network.

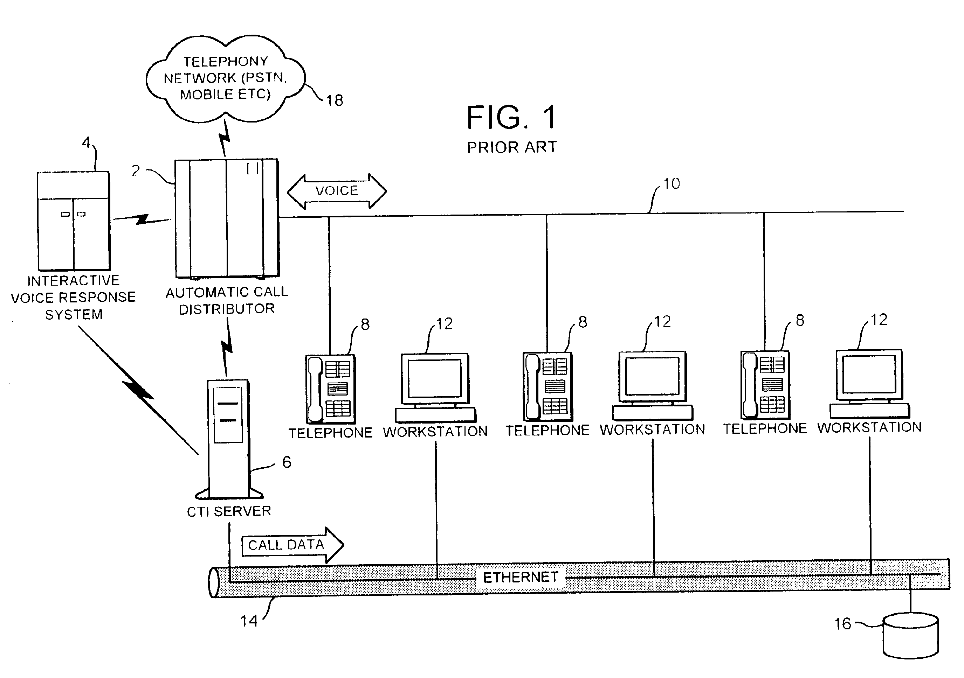

Figure 1 illustrates a known call centre arrangement. The call centre includes an automatic call distributor 2, an interactive voice response (IVR) engine 4, a computer telephony integration (CTI) server 6, agent telephone terminals 8 connected to the automatic call distributor 2 via a voice link 10 and agent workstations 12 connected to the CTI server 6 via a data link 14, such as an Ethernet. The agent workstations 12 are also connected to a subscription management database 16 via the data link 14.

Incoming calls directed to a customer services directory number are routed by the telephony network 18, which may be a public services telephone network (PSTN), mobile cellular network, etc., to the call centre. The call initially arrives at the automatic call distributor 2, which may either queue and distribute the call to an agent position or pass the call to the IVR engine 4. The IVR engine 4 interacts with the calling subscriber in accordance with a stored programme in order to elicit details of the type of enquiry the subscriber has. Once the desired details have been elicited from the caller by the IVR engine 4, the call is passed back to the automatic call distributor 2, whilst collected data is passed to the CTI server 6 for correlation with the call. The automatic call distributor 2 proceeds to place the call in a queue and routes the call, in accordance with the data collected by the interactive voice response system, to an appropriate agent position.

The automatic call distributor 2 also passes calling line identifier (CLI) and dialled number identification service (DNIS) data to the CTI server for correlation with the call, and, on delivering the call to an agent, passes a message to the CTI server 6 indicating the delivered destination. The CTI server 6 on receiving confirmation of the delivery of the call, passes the correlated call data to the corresponding agent position workstation 12 or other destination via the data link 14.

The agent workstation 12, on receiving the correlated call data. extracts data stored for the subscriber, identified by the CLI passed by the automatic call distributor 2 to the CTI server 6, from the subscriber management database 16, for use in dealing with the subscriber's enquiries. The agent may manipulate and update the data held for the subscriber in the subscription management data 16 during the conduct of the call with a subscriber.

In the arrangement described in relation to Figure 1, all subscribers are dealt with in the same manner, at least until such time as data is collected from the subscriber by the interactive voice response system, for example by the subscriber pressing keys on the terminal equipment being used, thereby transmitting DTMF tones to the IVR engines 4, or by voice control of the IVR engine 4.

In addition not all information on which a customer may have an enquiry is available in the databases accessible by the agents in the call centre. This necessitates eliciting of additional information from the customer.

Further details of known call centre arrangements may be found in "CTT Solutions and System", M. Bayer, McGraw-Hill 1997.

EP-A-0 821 510 describes a call centre which includes an automatic call distributor and a CTI server for routing both voice and video calls to a single group of agents. By means of recognising an automatic number identification (ANI), equivalent to a CLI, a routing server may control a routing function for the call by determining from the ANI whether the caller is a voice call customer or a video call customer.

EP-A-0 768 788 describes an automatic call distributor which allows callers to be assigned a preferred agent for handling their transactions. When those callers are connected to the ACD, they are identified, via ANI, and routed to a preferred agent as indicated by a data table stored in a switching system of the ACD.

Although the abovementioned prior art documents describe call centre arrangements which allow a call to be routed in accordance with previously stored data, the data in each case is stored primarily for use in the routing function.

WO-A-9 520 857 describes an intelligent peripheral connected to a public switched telephone network. The intelligent peripheral communicates with a service control point through a peripheral interface, and data stored in external systems is accessed by the service control point through a generic data interface to obtain customer data on handling of a call by the intelligent peripheral. The service control point is able to instruct the transfer of the call from the intelligent peripheral to an automatic call distributor, and the routing for the call from the ACD may be determined by the service control point. However, any data derived from external systems must be accessed only once call control is passed over to the service control point, following receipt of the call at the intelligent peripheral. Where the external systems are remotely located from the service control point, or the interface between the service control point and the external systems is such that the query mechanism uses prolonged, delays in the handling of calls may be experienced. Furthermore, the amount of data traffic between the server control point and the external systems may be undesirably large when handling large numbers of calls. Furthermore. interaction with the caller must occur at the intelligent peripheral prior to any routing function outcome being determined, which is inconvenient to the caller.

WO 98/21905 discloses a method and device for providing access to services and equipment in a GSM mobile telephone network via an external telecommunication network, by which an international access switching node (IAN) of a GSM network can be dialled directly, by means of a special call number. Once the international access switching node (IAN) has been dialled, the subscriber is requested to select a desired service or equipment which he/or she wishes to access. Upon selection the subscriber identifies himself/herself through dialogue oriented interrogation of his/her mobile call number (MSISDN) and a personal identification number (PIN). A system for automatic call distribution (ACD) enables a connection to be established with the desired service or equipment. Access to the required service or equipment is provided once the subscriber's MSIDN or the PIN has been checked.

EP 0 647 076 discloses a cellular radio communication system employed within a network of geographical cells, the radio communication system comprising means for supplying a mobile station with at least one personalised service on the basis of information on the geographical location of the mobile stations. The system comprises: means for recognizing and branching off a first signalling message transmitted between a base station subsystem and a switching and network subsystem; means for picking off the location information contained in the first branched-off signalling message, and means of routing the location information picked off towards the radio communication system means for supplying at least one personalised service related to the location.

WO 98/25387 discloses a call servicing system allowing service agents to service calls from customers. The system includes local customer switches, local agent switches, and a customer database connected to a network call center. The local customer switches direct calls to and from the customers and the local agent switches direct calls to and from the service agents. The customer database stores information regarding the customers sending the calls. The network call center receives a call from a first one of the customers, queries the customer database to retrieve customer information corresponding to the first customer, and concurrently routes the customer call and the corresponding customer information to one of the service agents.

WO 98/28923 discloses a method and a system for providing a data connection between an agent and a database of a company to which a calling subscriber desires to make a contact and a speech and/or data connection between the agent and the calling A-subscriber as the A-subscriber calls to a service number of a predefined service provider. The call is directed to a services switching point of an intelligent network, from which the information concerning the call called to the number is transferred to a services control point, a free agent is reserved in the service control point on basis of a table, an information is given to provide connections to the service switching point, a data connection is established from the database of the desired service provider to the agent, and a connection is established between the caller and the agent.

In accordance with the invention there is provided a method of handling a call from a subscriber in a telecommunications network, the call being directed to a customer services resource in the telecommunications network, as defined in claim 1.

Embodiments of the present invention will now be described, by way of example only with reference to the accompanying drawings, wherein:
Figure 1 is a schematic illustration of a known call centre arrangement;
Figure 2 is a schematic block diagram of a mobile communications network including a call centre arranged in accordance with embodiments of the invention;
Figure 3 is a schematic illustration of a network arrangement including a call centre arranged in accordance with an embodiment of the invention;
Figure 4 is a flow diagram illustrating procedures carried out by the automatic call distributor illustrated in Figure 3;
Figure 5 is a diagram schematically illustrating data records held in a dedicated call caller data store of the arrangement of Figure 3;
Figure 6 is a schematic illustration of apparatus and a procedure used for controlling a call routing function in an intelligent network service switching function in accordance with a further embodiment of the invention;
Figure 7 is a schematic illustration of apparatus and a procedure used for controlling a call routing function in an intelligent network service switching function in accordance with a further embodiment of the invention; and
Figure 8 is a schematic illustration of apparatus and a procedure used for correlating data with a call in a call centre in accordance with a further embodiment of the invention.

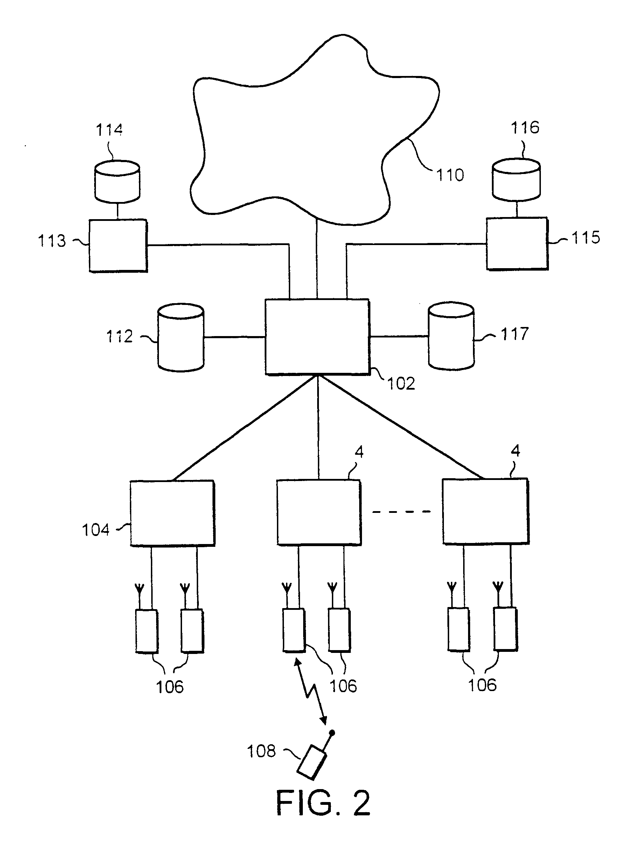

A GSM network, referred to as a public land mobile network (PLMN), is schematically illustrated in Figure 2. This is in itself known and will not be described in detail. A mobile switching centre (MSC) 102 is connected via communication links to a number of base station controller (BSCs) 104. The BSCs 104 are dispersed geographically across areas served by the mobile switching centre 102. Each BSC 104 controls one or more base transceiver stations (BTSs) 106 located remote from, and connected by further communication links to, the BSC. Each BTS 106 transmits radio signals to, and receives radio signals from, mobile stations 108 which are in an area served by that BTS. That area is referred to as a "cell". A GSM network is provided with a large number of such cells, which are ideally contiguous to provide continuous coverage over the whole network territory.

A mobile switching centre 102 is also connected via communications links to other mobile switching centres in the remainder of the mobile communications network 110, and to other networks such as a public service telephone network (PSTN), which is not illustrated. The mobile switching centre 102 is provided with a home location register (HLR) 112 which is a database storing mobile terminating call routing data. subscriber authentication data and service data.

The mobile switching centre is also provided with a visitor location register (VLR). which is generally integrated with the MSC and therefore not shown in Fig. 2, which is a database temporarily storing subscriber authentication data and service data for mobile stations active in its area.

In addition, the mobile network contains a call centre 113, which receives customer service enquiries from callers directing calls to a predetermined service number from within the mobile communications network or from the PSTN.

As a result of usage of the facilities provided by the network, call records are generated and transmitted to a billing centre 115. These call records are held in a billing database 116, and processed in the billing centre to generate billing data whereby to invoice customers. Each customer has a predefined billing cycle, at the end of which a bill is produced. The bill cycle defining data and bill data is also stored in the billing database 116.

The network is also provided with an IMEI/IMSI register (IIR) 117, which is a database holding a list of International Mobile Subscriber Identities (IMSIs) belonging to Subscriber Identity Modules (SIMs) held by subscribers of the network, and against each IMSI record, a record of the International Mobile Equipment Identity (IMEI) of the user station, which includes an equipment type code defining the model of the equipment used and in which the SIM was last known to be inserted.

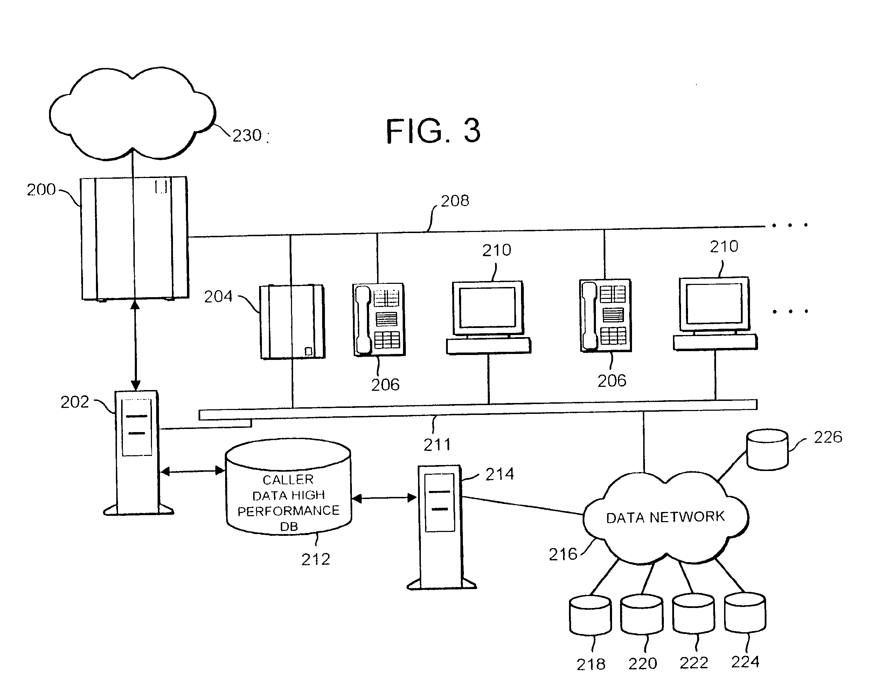

Figure 3 illustrates a call centre arrangement in accordance with an embodiment of the invention. The call centre contains teams of agents, also referred to as customer service representatives (CSRs) which are delivered calls by an automatic call distributor (ACD).

Each of the agents in the call centre has a workstation which is connected to a subscription management database 114, which contains detailed records of the subscription details for each subscriber. These records may be accessed and updated by the call centre agents during processing of a call from a subscriber.

The call centre includes an automatic call distributor (ACD) 200 connected via a CTI data link to a CTI server 202, an IVR engine 204, agent telephone terminals 206 connected via a voice link 208 to the ACD 200 and agent workstations 210 connected along with the IVR engine 204 via a data link 211, such as an Ethernet, to the CTI server 202.

### ROUTING USING DATA DERIVED FROM NETWORK DATABASES

In this embodiment the call centre also includes a call caller data store 212 which is preferably local to the CTI server 202 and located in the call centre.

The caller data store 212 is connected via a data link to a provisioning computing resource 214, which regularly collects data, via a data network 216, from databases 218-226 distributed throughout the mobile communications network of Figure 2.

The distributed databases 218-226 include a home location register 218. a visitor location register 220, a billing database 222, an IIR 224 and a subscription management database 226 accessible by agents in the call centre via their workstations 210. As will be appreciated by the skilled addressee, the data stored in databases 218-226 of the mobile communications network is intended for use primarily in relation to functions other than a customer services call routing function. Other databases distributed throughout the mobile communications network may also supply data to the provisioning computing resource 214.

The caller data store 212 is preferably an object oriented high performance database. By storing data in an object-oriented manner, with data objects stored in memory blocks on a per-subscriber and/or per-account basis, the query response time can be reduced and made more reliable in comparison with a SQL (Structured Query Language) database.

The provisioning computing resource 214 is in this embodiment a computer workstation 214 programmed with a provisioning software application programme, such as an IBM MQ Series workstation. The provisioning process may be such as to conduct a regular audit of data held in the databases 218-226, which may be altered at any time, in order to detect changes in the relevant data held in those databases and to update the caller data store 212 accordingly.

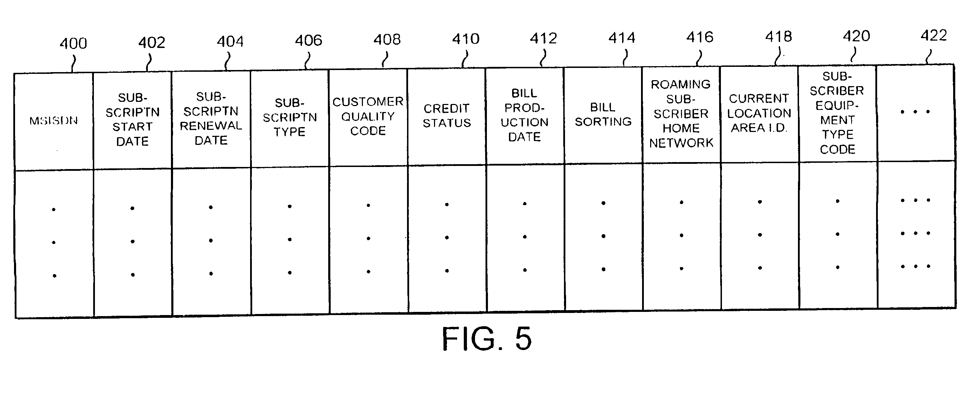

Referring briefly to Figure 5, caller data store 212 contains data which may be arranged in a subscriber data as illustrated. including data identifying Mobile Services International Subscriber Directory Number (MSISDN) of each subscriber of the mobile communications network, and of roaming subscribers currently being served by the mobile communications network. Each MSISDN is stored in an MSISDN field 400. Against each MSISDN field 400, a set of fields 402-422 is provided for storing data derived from databases 218-226 relevant to specific routing function outcomes in the call centre.

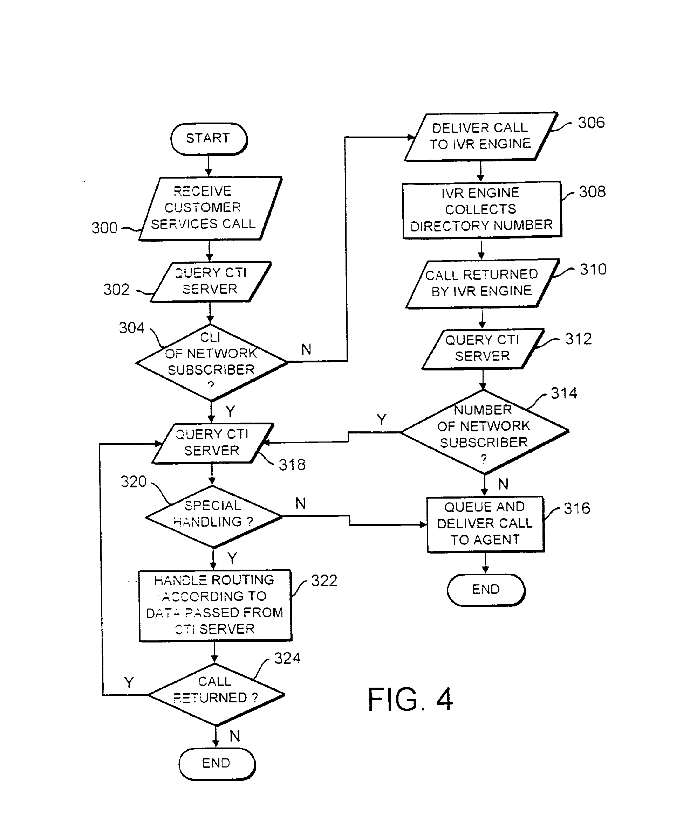

Figure 4 illustrates a procedure carried out by the ACD 200 in order to control the call routing function of calls directed to the customer services resource, in this case a call centre, from the mobile communications network switches 230. When the ACD 200 receives a customer services call, directed to a customer services number dialled by a subscriber on a mobile terminal or on a fixed line PSTN terminal, the ACD 200 detects the CLI associated with the call, and queries the CTI server 202, step 302. The CTI server 202 in turn queries the caller data store 212 to determine whether the CLI supplied by the ACD corresponds with an MSISDN stored in the subscriber data, and transmits a return message to the ACD 200 indicating whether the CLI is recognised or not, step 304.

If the CLI is not recognised, the ACD transfers the call to the IVR engine 204. instructing the IVR engine 204 to run a stored programme to request, via an IVR interaction, the MSISDN of the subscriber's mobile station, step 306. The call may be originated from a fixed line terminal, in which case the CLI is not that of the subscriber's mobile station.

The IVR engine 204 proceeds to collect the directory number of the subscriber's mobile station, step 308, and returns the call to the ACD 200. In the same process. the IVR 204 returns the collected directory number to the CTI server 202, which correlates that data with the call.

The ACD 200 queries the CTI server 202 to determine whether the number provided by the subscriber is recognised in the subscriber data held in caller data store 212, step 312. The CTI server 202 returns a message indicating whether or not the collected number is recognised. If the collected number is not recognised, or if no number is provided by the customer, it is assumed that the customer is not a subscriber authorised to use the mobile communications network, and the call is queued and delivered to an agent in a default manner, step 316.

When a call is delivered by the ACD 200, the ACD 200 transmits a message to the CTI server 202 indicating the agent position to which the call is delivered, and the CTI server 202 transmits any correlated data collected for the call to the corresponding agent workstation 210.

If the ACD 200 is notified by the CTI server 202 in steps 304 or 314 that the detected or collected directory number is that of a subscriber authorised to access the mobile communications network, the ACD 200 transmits a further request to the CTI server 202 to determine whether the call requires special handling. In turn, the CTI server 202 checks data present in the data fields 402-422 against the recognised MSISDN. If no special handling requirement is determined for the recognised MSISDN, the call is queued and delivered to a call agent by the ACD in a default fashion, step 316.

If relevant data present in any of the fields 402-422 in the subscriber data table against the recognised MSISDN, the CTI server 202 notifies the ACD that special handling is required in step 320. The message transmitted by the CTI server 202 includes data indicating the type of special handling required, as indicated by data stored in at least one of the fields 402-422 in the subscriber data table against the recognised MSISDN.

If data is stored in more than one of the fields 402-422 of the subscriber data table against the recognised MSISDN, the call may require more than one instance of special handling, in which case the CTI server selects, in accordance with stored prioritisation rules, a routing function outcome which is to be proceeded with first, and marks in data correlated with the call the routing outcome already instructed, so that when the ACD 200 follows with a further request for special handling instructions from the CTI server 202, the next special handling instruction in the prioritisation sequency determined by the stored rules is communicated to the ACDs 202.

On receiving a special handling instruction response from the CTI server 202, the ACD handles routing of the call in accordance with the instruction, step 322. If the call is subsequently returned to the ACDs 200, step 324, the ACD proceeds to query the CTI server again, step 318, in order to determine any further special handling which may be required. If no further special handling is required, the ACD 200 proceeds to queue and deliver the call to an agent in a default fashion, step 316. In this manner, the ACD proceeds to conduct one or more routings of the call to the IVR engine 204 and/or one or more agent positions, during handling of the calls, until such time as no more automatic call distribution is required.

### Provisioning of Caller data store

The caller data store 212 is a data store, such as a cache memory, local to the CTI server 202. The caller data store 212 is local to the CTI server insofar as it is either physically integrated into the same unit as a CTI server 202, or at least located within the same premises, in this case the call centre itself.

The provisioning resource 214 provisions the caller data store 212 by copying data items from the mobile communications network databases 218-226 so as to maintain data stored within the caller data store 212 substantially consistent with data stored in the databases 218-226. Some types of data stored in the caller data store 212 may be in the form of data items calculated from data stored in one or more of the databases 218-226.

Referring again to Figure 5, the routing data table includes data items stored in fields 402-422 against each MSISDN of subscribers served by the mobile communications network.

Data fields 402 to 416 hold commercial data relating to the subscribers in question.

Data fields 402 to 410 contain data copied by the provisioning computing resource 214 from the subscription management database 226. Data field 402 contains data defining the date on which the subscriber's subscription to the mobile communications network first became effective. Data field 404 contains data defining the next date of renewal for the subscriber's subscription. Data field 406 contains data defining a subscription type held by the user. defining the subscriber's rights of access to customer services. Data field 408 contains a customer quality code assigned to the subscriber. The customer quality code is calculated in the subscription management function, or by the provisioning computing resource 214, from data indicating factors affecting the value of the subscriber to the network, including for example the customers average billing amount (which may be derived from billing database 222) and other factors. such as the total length of time the customer has held a subscription, the occurrence or otherwise of payment problems in the past, etc, which define the long-term value of the customer to the network. Data field 410 contains data defining a current credit status of the user, indicating any credit problems currently associated with the subscriber's account.

Data fields 412 and 414 are provisioned with data copied from the billing database 222. Data field 412 contains data defining the periodic bill production date, that is to say, the end of the bill cycle, for the subscriber. Data field 414 contains data defining whether a billing problem has occurred in relation to a recently-produced bill for the subscriber. This data may be derived from a bill sorting mechanism applied in relation to the data held in billing database 222, identifying subscriber accounts for which an identified billing fault has occurred. For example, a billing fault may have occurred for a predefined period. in which case data field 414 will contain data identifying subscribers for which a bill was produced during that predefined period.

Data field 416 contains data copied from VLR database 220. The data is a home network code (such as a PLMN code) identifying the home network of a subscriber currently roaming on the mobile communications network to which the call centre is attached. Notably, for a roaming subscriber, many or all of data fields 402 to 414 will not be populated, as this data will not be available in the subscription management database 226 or the billing database 222. The home network code may be seen as commercial data. insofar as the code is used to determine the recipient network operator for charges made relating to usage of resources by the roaming subscriber.

Data field 418 contains data copied from the VLR 220 and/or a register of a base station, which defines the current location of the subscriber. This location may be defined by means of a location area, which corresponds to the area served by a base station.

Data field 420 contains the subscriber equipment type code copied from the IIR database 224 for each subscriber.

Data field 422. which is indicated as a single data field but may consist of a plurality of data fields, is for containing other data items to be copied or derived from any of the databases 218-226, for routing handling decisions only occasionally implemented.

### Special Handling by the Automatic Call Distributor

The data contained in data fields 402-422 of the caller data store 212 is used for improving the functionality of the routing applied by the ACD 200 when a subscriber recognised in the caller data store 212 calls the customer services call centre.

The data contained in the caller data store 212 may be processed by the CTI server 202, in accordance with a stored programme in the CTI server 202, to specify any special handling required to the ACD 200. Alternatively, the CTI server may pass selected data items from the caller data store 212 to the ACD 200 on request, whereby the ACD 200 determines a desired routing function outcome by applying a stored programme to the data passed from the CTI server 202. As a further alternative, both the CTI server 202 and the ACD 200 may conduct a part of the data processing required to determine the special handling requirement. The special handling as determined by that data processing results in the routing handling step 322 of Figure 4 in each case. In each case. the routing function outcome applied by the ACD 200 is determined by control messages passed to it from the CTI server 202, which are derived from data stored in the caller data store 212, which in turn contains data derived from the databases 218-226 of the mobile communications network. Particular cases of special handling will be described below.

### New Subscribers

New subscribers are identified from the data stored in data field 402 of the routing data table. A new subscriber may be defined as a subscriber having a subscription start date which is within a predefined period preceding the current date. The call routing function outcome applied by the ACD 200 is to select a customer services agent specialised in dealing with enquiries frequently made by new subscribers.

### Renewal Due Subscribers

Renewal due subscribers are identified by means of data stored in data field 404 of the routing data table. Renewal due subscribers are defined as customers having an upcoming renewal date within a predetermined period from the current date. The routing function applied by the ACD 200 results in the routing of the call to a customer services agent specialised in dealing with subscription renewal matters.

### Customer Services Restricted Subscribers

Customer services restricted subscribers are identified from data held in data field 406 of the subscriber data table. For example, the subscriber may hold a subscription type which does not entitle the customer to use customer services. The call routing function applied by the ACD 200 results in the call being routed to a sales agent offering the subscriber the opportunity to purchase customer services access. Alternatively, the data contained in data field 406 may indicate that the subscriber is entitled only to a particular type of customer services access, such as IVR access. The ACD 200 call routing function results in the call being delivered to the IVR engine 204 to conduct the customer services interaction with the subscriber.

### High Value Customers

High value customers are identified by data contained in data field 408. If a particular subscriber is identified as having a high customer quality code, the routing function applied by the ACD 200 results in the customer being allotted high priority queuing status, so that the call is delivered to a customer services agent position faster than in the default queuing case. In addition, the call routing function applied by the ACD 200 may result in the call being delivered to a customer services agent specialised in dealing with high value customers, to thereby improve the quality of service provided to the customer.

### Credit Problem Subscribers

Subscribers having an identified credit problem are identified by means of data stored in data field 410 of the subscriber data table. The call routing function applied by the ACD 200 results in the call being delivered to a credit control agent, who is able to attempt to resolve the problem during the customer services interaction with the subscriber.

### Recently Billed Subscribers

Recently billed subscribers are identified from data stored in data field 412 of the subscriber data table. Recently billed customers may be defined as customers having a bill production date which falls within a predefined period preceding the current date. The call routing function applied by the ACD 200 results in the call being delivered to a customer services agent specialised in dealing with billing enquiries, which the customer is likely to have.

### Billing Faults

Subscribers which have received bills which have been the subject of an identified billing fault are identified by data contained in data field 414. The ACD routing function applied results in the call being delivered to the IVR engine 204, and the IVR engine 204 playing a voice message explaining the nature of the problem and allowing the problem to be resolved by means of interactions with the subscriber. This allows the billing fault to be resolved without requiring the involvement of a human operator.

### Roaming Subscribers

Roaming subscribers may be identified by data contained in data field 416 of the routing data table. The ACD routing function applied may result in the call being delivered to the IVR engine 204, and the IVR engine 204 playing a voice message indicating that customer services are not available to roaming subscribers and requesting that the subscriber call the customer services resource of their home network. By means of the home network code contained in data field 416, the directory number of customer services for the home network in question may be determined, from a look up table, and replayed to the roaming subscriber by the IVR engine 204.

### Network Problems

Customers which may be subjected to location-specific network-related problems, such as transmitter faults in a cell of the network, may be identified by data stored in data field 418 of the routing data table. The routing function applied by the ACD 200 results in the call being delivered to the IVR engine 204, and the IVR engine playing a voice message detailing the nature of the problem and related matters.

### Subscriber Equipment-Related Notifications

Subscribers using mobile stations regarding which the mobile network operator wishes to provide the subscriber with a notification are identified by data stored in data field 420 of the routing data table. For example, the subscriber equipment in question may have been identified as having a particular fault. The routing function outcome applied by the ACD is to route the call to the IVR engine 204, which plays a voice message containing the desired notification.

In each of the above cases where the call routing function outcome is that the call is delivered to an agent position, the relevant data from the caller data store 212 causing the routing function outcome is correlated with the call by the CTI server 202 and communicated to the agent workstation 210. This allows the agent workstation to automatically retrieve and display information relating to the reason for the special handling of the call. In the case of a call routing function outcome being that the call is routed to the IVR 204, the CTI server 202 passes the reason for the special handling instructions along with other correlated call data to the IVR engine 204 via data link 211, to allow the IVR engine to identify which stored programme procedure is to be followed when interacting with a customer.

In certain of the cases outlined above, a customer may receive a call routing outcome which is unexpected. For example, a subscriber having an identified credit problem may be immediately routed to a credit control agent, whilst the customer may have required a different customer services interaction. In such a case, the call may be returned to the ACD 200 following the special handling of the call, the call being handled on a default basis thereafter.

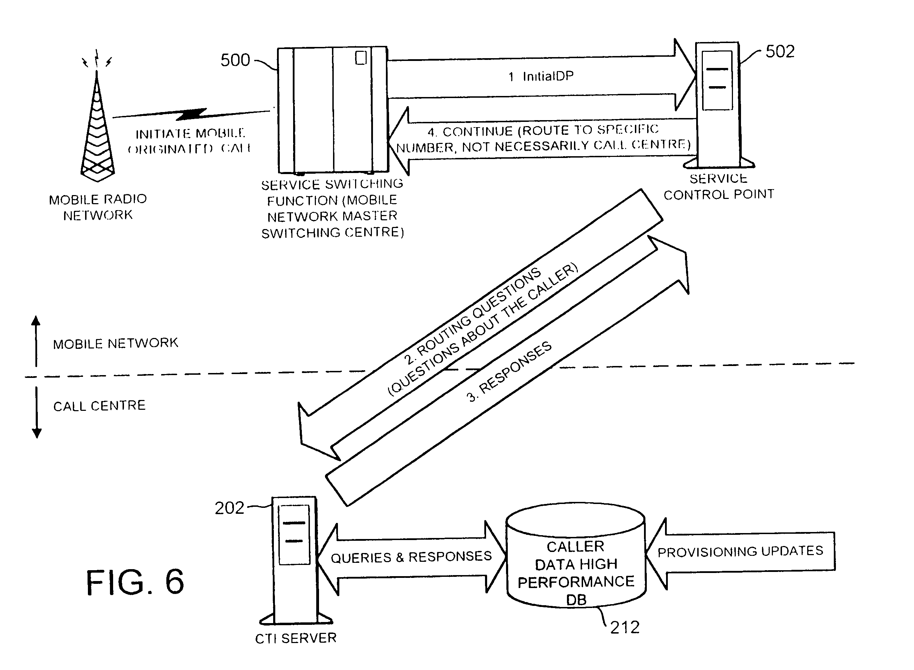

Figure 6 illustrates a further embodiment of the invention whereby a customer services call routing function may be controlled using an intelligent network (IN) service control function in the mobile communications network, instead of or in addition to using the ACD functionality described above.

In this embodiment, the MSC 500 receiving a mobile-originated, or PSTN-originated, call is IN-enabled, thereby operating as an IN service switching function (SSF) which interacts by the passing of information flows (IFs) with an IN service control information (SCF) which in this embodiment is realised in a service control point (SCP) 502. The SCP 502 communicates with the MSC 500 using intelligent network protocols, such as those defined in Core INAP, European Telecommunications Standards Specification ETS 300 374-1. A description of Intelligent Network concepts and functionalities may be found in "Intelligent Networks: Basic Technology, Standards and Evolution", Magedanz and Popescu-Zeletin, International Thomson Computer Press 1996.

A mobile-originating customer services call is directed at a prespecified service identifier, in this case the customer services directory number, which the MSC/SSF 500 recognises as requiring intelligent network call processing. This allows the call processing to be passed from the MSC/SSF 500. Accordingly, the MSC/SSF 500, after collecting information from the call from incoming signalling and from the VLR, transmits an information flow in the form of an InitialDP message to the SCP 502. InitialDP message contains the calling number of the subscriber and other details which may be useful in determining a routing function for the call.

This embodiment of the invention also includes a CTI server 202 and a caller data store 212. Since the CTI server 202 may operate using the functionality described in relation to the previous embodiment and since the caller data store 212 may be provisioned in the manner and with the data described in relation to the previously-described embodiment, identical reference numerals are used. The SCP 502 communicates with the CTI server 202 using intelligent network protocols.

On receiving the InitialDP message (indicated as step 1 in Figure 6), the SCP queries the CTI server 202 (indicated as step 2 in Figure 6). The CTI server queries the caller data store 212 in order to retrieve data held in the caller data store 212 for the subscriber identified in the received query. On the basis of the retrieved data, the CTI server 202 responds to the SCP 502 (indicated as step 3 in Figure 6). The response of the CTI server indicates any special handling instructions determined from the data retrieved from the caller data store 212. On the basis of the response retrieved from the CTI server 202, the SCP 502 instructs the MSC/SSF 500 with a selected call routing destination (indicated as step 4 of Figure 6), which is either a default destination or a special handling destination.

In the manner described, the routing of the call directed at customer services may be controlled by control messages derived from data held in the databases 218-226 of the mobile communications network.

In the embodiment illustrated in Figure 6, the call routing outcome may be routing to a destination other than the call centre, if such special handling requirements are indicated by the data held in caller data store 212. For example. in the case of a roaming subscriber, calls originally directed to the customer services resource of the mobile communications network in which the subscriber is roaming may be redirected to the customer services resource of the roaming subscribers home network, by reference to the data held in field 416 of the subscriber data table illustrated in Figure 4, which indicates the home network code, and a look up table, which indicates the corresponding customer services directory number.

In the above embodiments, routing function decisions are based on data accessed by the CTI server 202 from the caller data store 212. A dedicated customer services caller data store, although preferred and advantageous due to the increased response speeds and the reduction in network data traffic which may be achieved thereby, need not be employed. In alternative embodiments, the CTI server 202 retrieves the data, on which routing function decisions are to be based, directly from the databases 218-226 via the data network 216.

### ROUTING USING DATA DERIVED FROM IN INFORMATION FLOW

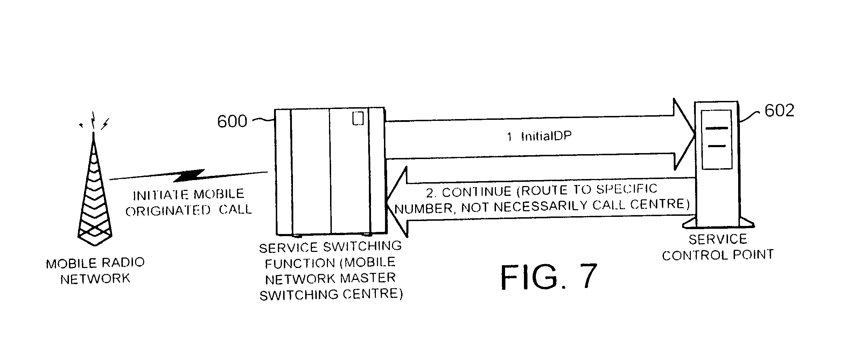

It is also possible to control a routing function for calls directed to customer services using an MSC/SSF 600 and an SCF, for example in the form of a SCP 602, as illustrated in Figure 7. In this embodiment, mobile-originating customer services calls are recognised by the MSC/SSF 600 as requiring intelligent network call processing. Accordingly, the MSC/SSF 600, after collecting information about the call from incoming signalling (derived from the mobile station, the serving base station and/or other network elements) and from the VLR, transmits an IN information flow in the form of an InitialDP message to the SCP 502 (indicated as step 1 in Figure 7).

Any of the information elements passed in the InitialDP message, in addition to the dialled number identification as used in the prior art, may be used by the SCP 602 to determine a routing function outcome for the customer services call. The SCP 602, using a stored IN service logic programme, operates on the data passed in the InitialDP message and generates a Continue message, specifying a routing destination in the form of a routing number, which is transmitted to the MSC/SSF 600 (indicated as step 2 in Figure 7).

The MSC/SSF 600 resumes call processing and routes the call to the routing number specified in the Continue message received from the SCP 602.

The routing number specified need not necessarily be the main customer services call centre routing number. For example, the routing number may be a separate routing number for an IVR engine dedicated to handling customer services calls of a specific nature, as identified by the SCP from data derived from the InitialDP message.

The following subscriber data table elements, other than the dialled number identification, may be made available in the InitialDP message:
1. The MSISDN of the calling subscriber.
2. A location identifier, which may be the cell identity of the cell in which the subscriber is receiving service.
3. The IMSI of the subscriber.
4. The IMEI of the mobile handset being used by the subscriber.
5. Supplementary services information for the subscriber, detailing settings (active and inactive) for supplementary services as used in GSM, including whether or not the subscriber is the member of a closed user group, whether or not the subscriber has activated unconditional call forwarding, subscriber determined barring settings (such as international call barring), call waiting, etc.
6. The unconditional call forwarding number, if unconditional call forwarding has been set by the subscriber.
7. The identity of the closed user group, if the caller is a member of a closed use group.
8. Roaming information, indicating whether the caller is an international roaming subscriber or is roaming from another national network.
9. Any operator determined barring status.
10. The HLR number for the subscriber, which is the identity of the home location register on which service and authentication data for the subscriber is held.
11. Calling party category identifiers, which may be used to distinguish customers having a particular subscription type, such as pre-pay.

An example of the routing function which may be applied by the SCP 602 is the routing of calls being made from certain cells in the network. The SCP 602 may be arranged to contain, or have access to, data indicating the identities (IDs) of cells in the network where identified network equipment faults have occurred. By deriving the cell ID of the cell in which the subscriber is receiving service from the InitialDP message, the SCP 602 is able to determine when a mobile-originated call is received from a customer located in a cell in which network faults have been identified, and instruct the MSC/SSF 600 with a suitable non-default routing number. The MSC/SSF 600 may for example route the call to an IVR engine informing the subscriber of the network fault.

As a further example, the SCP 602 may be arranged to contain, or have access to, data indicating the identities of closed user groups requiring specific customer services interactions, for example because the users may be participating in the trial of a new service or equipment. The SCP 602 is able to identify members of such closed user groups, using the closed user group ID contained in the InitialDP message received from the MSC/SSF 600, to instruct the MSC/SSF 600 to route the call to a suitable non-default routing number. For example, the MSC/SSF 600 may route such calls to a specialist team of agents.

The above two examples are not intended to be limiting. One or more of the data elements 1 to 11 described above may be used, either alone or in combination. in order to determine a routing function outcome in the SCP 602.

It has been mentioned above in relation to the embodiments of Figures 6 and 7 that the routing number to which calls are routed from the MSC/SSF need not be that of main customer services call centre. It should be added that the main customer services call centre may be provided with a plurality of routing numbers, one or more of which are used for default handling and one or more of which are reserved for the routing of customer services calls requiring special handling. Calls requiring special handling are then routed using one of the reserved routing numbers.

### CORRELATING DATA DERIVED FROM IN INFORMATION FLOWS

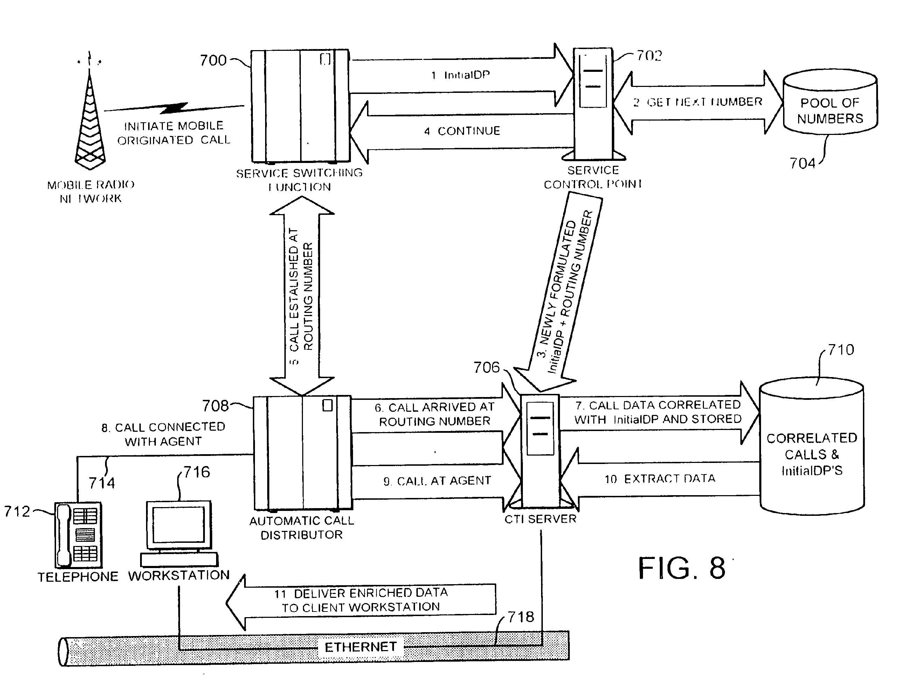

Figure 8 illustrates a further embodiment of the invention, in which data derived from an IN information flow may be correlated with a call routed in a call centre using an automatic call distributor.

Referring again to Figure 1, in the prior art arrangement of a customer services call centre, the information which may be initially correlated with the call is limited by the interface between the telephony network 18 and the ACD 2 (for example, the standard ISDN user part ISUP), and the interface between the ACD 2 and the CTI server 6 (which may be proprietary). In addition, the information made available from incoming signalling by the ACD 2 for correlation with the call may be limited by the vendor specification of the ACD 2 itself Generally, the only information which is initially available for correlation with the call consists of the CLI. identifying the calling party number and the DNIS. identifying the dialled number. Additional data may be correlated with the call by means of information collection at the IVR engine 4, however this requires the subscriber to provide data to be correlated with the call. Other data may be derived from the subscription management database 16. however various elements of information available in the network cannot readily be made available in the subscription management database.

In this embodiment, the data elements available in the InitialDP message, including data elements 1 to 11 described above, may be correlated with the call and delivered to an agent position, or IVR engine, on delivery of the call by an automatic call distributor.

Referring to Figure 8, the MSC 700 is IN-enabled and operates as a service switching function, and a customer services call centre includes an IN service switching function embodied in an IN SCP 702 having access to a database 704 storing a pool of routing numbers and a CTI server 706. The CTI server 706 has access to a database 710 storing call correlation data and receiving CTI messages from an automatic call distributor 708. The call centre also includes a plurality of agent positions, of which one is shown in Figure 8, and may include an IVR engine which is not shown in Figure 8. In the exemplary agent position shown in Figure 8, a telephone terminal 712 is connected via a voice link 714 to the ACD 708, and an agent workstation 716 is connected to the CTI server 706 via a data link 718. such as an Ethernet.

On receiving a mobile-originated call directed to a customer services number, the MSC/SSF 700 recognises that the call requires IN call processing, and passes an InitialDP message, containing data elements 1 to 11 described above, to the SCP 702 (indicated as step 1 in Figure 8).

The routing number database 704 contains a large number of routing numbers which route calls from the MSC/SSF 700 to the ACD 708. An individual routing number is assigned to each customer services call currently being handled by the call centre, so that data passed from the SCP 702 to the CTI server 706 may be correlated with a call arriving at the ACD 708.

On receiving the InitialDP message the SCP 702 selects the next available routing number from the routing number database 704 (indicated as step 2 in Figure 8), reformats the InitialDP message to contain not only data from the InitialDP message received from the MSC/SSF 700 but also the allotted routing number, and transmits the newly formatted message to the CTI server 706 (indicated as step 3 in Figure 8). The SCP 702 also then transmits a Continue message, containing the allotted routing number, to the MSC/SSF 700 (indicated as step 4 in Figure 8). The MSC/SSF 700 continues with call processing by routing the call to the ACD 708 using the allotted routing number (indicated as step 5 in Figure 8).

On receipt of the call, the ACD 708 notifies the CTI server 706 of the call arriving at the allotted routing number (indicated as step 6 in Figure 8), providing the CTI server with a correlation ID whereby the call data may be subsequently correlated with the call. Using this information, the newly formatted InitialDP message, temporarily stored in the CTI server 706, is passed by the CTI server 706 to the correlated call database 710 along with the allotted correlation ID for storage (indicated as step 7 in Figure 8). The ACD 708 then proceeds to queue and subsequently deliver the call to an agent position, or the IVR engine, when resources become available, via voice link 714. The ACD 708 notifies the CTI server 706 of the delivery of the call, by passing a message containing the agent position, or IVR engine identity, with the call's correlation ID to the CTI server 706 (indicated as step 9 in Figure 8). Using the correlation ID, the CTI server 706 extracts the previously-stored InitialDP data for the call from the correlated call database 710 (indicated as step 10 in Figure 8). and delivers the correlation data, including InitialDP message data elements 1 to 11 described above, to the workstation 716 at the appropriate agent position, or the IVR engine, via data link 718 (indicated as step 11 in Figure 8).

In the manner described above, the data available in the InitialDP message originally passed from the MSC/SSF 700 to the SCP 702 is made available to the agent handling the call, or the IVR engine, for use in the customer services interaction.

As an example of the utility of data derived from the InitialDP message to the agent, or IVR engine, handling the customer services call, the IMEI contained in the InitialDP message may be used to identify the model of handset being used by the calling subscriber. When the caller has a query regarding the use of the handset, the agent's screen on the workstation 716 can be pre-populated with a user manual and details about the particular handset being used by the caller. The agent is then able to ensure correct instructions are given for the use of the particular model of handset used, without having to request the model details from the caller during the customer services interaction.

As a further example, the handling agent or IVR engine is able, using the supplementary services information and barring status information contained in the InitialDP message, to immediately identify those elements of the status of a caller's subscription. If for example a caller is unaware that unconditional call forwarding is currently activated, the agent is able to advise appropriately. Also, if the network operator has set a particular barring status in relation to the subscriber, such as international call barring, the caller may be advised appropriately by the customer services agent or IVR engine.

As a yet further example, a closed user group indicator in the InitialDP message may be used at the agent workstation 716 to populate the screen with a specific informational display relating to the closed user group.

In each of the examples described above, additional information otherwise not available to the party conducting the customer services interaction, but contained in the intelligent network information flow, is made available without the subscriber having to supply the information.

### ACD ROUTING USING IN INFORMATION FLOW DATA

The arrangement of Figure 8 may also be used to allow call routing functions applied by the ACD 708 to be based on data derived from the IN information flow messages passed between the MSC/SSF 700 and the SCP 702. In this regard, when handling a call, the ACD 708 may request the CTI server 706 to provide instructions for special handling, which instructions may be based on data derived from one or more of data elements 1 to 11 of the InitialDP message passed between the MSC/SSF 700 and the SCP 702 and from the SCP 702 to the CTI server 706.

As will be appreciated, the examples previously described in relation to the arrangement of Figure 7 also apply to this embodiment of the invention. Namely, the call may be routed by the ACD 708 in dependence on the cell ID of the cell in which the caller is receiving service, a closed user group of which the caller is a member, or one or more of the other data elements 1 to 11 described above, either alone or in combination.

It should be mentioned that, although the arrangement of Figure 8 includes a separate SCP 702, the service control function may also be embodied in the automatic call distributor 708.

It is to be mentioned that the routing function outcomes described above need not all be available in the call centre. One or more of the special handling outcomes may be usefully employed alone or in combination in order to provide improved call centre functionality.

It is envisaged that further modifications and variations may be employed in relation to the embodiments described without departing from the scope of the present invention.

## Claims

1. A method of handling a call from a subscriber in a mobile telecommunications network, the call being directed to a customer services resource in the mobile telecommunications network, said method comprising:
implementing a customer services call routing function, said call routing function being controlled in order to generate one of a plurality of different routing function outcomes which each involve routing a call from a subscriber to a different call routing destination, wherein the method comprises the steps of:
deriving selected data from a plurality of databases (218-226) of the mobile telecommunications network containing subscriber data, said plurality of databases (218-226) relating primarily to functions other than routing functions of the mobile telecommunications network;
populating subscriber records (400-422) in a routing data store (212) with said selected data, prior to receiving a call from a subscriber;
querying said routing data store (212) in response to receiving said call from a subscriber;
generating a special handling instruction for said call from a subscriber if a subscriber record comprising selected data derived from the plurality of databases (218-226) held for the subscriber in the routing data store (212) indicates a need for special handling of the subscriber's call;
controlling said customer services call routing function for said call from a subscriber so as to select a special handling routing function outcome in response to the generation of said special handling instruction.

2. A method according to claim 1, wherein said routing data store (212) is local to said customer services resource.

3. A method according to claim 1 or 2, comprising deriving said selected data, and populating said subscriber records, from data held for the subscriber in a plurality of said databases (218- 226), prior to receiving said call.

4. A method according to claim 1, 2 or 3, wherein said selected data is dedicated to a customer services call routing function when held in said store (212).

5. A method according to any preceding claim, comprising using an automated provisioning means (214) to update said selected data in response to changes in the subscriber data stored in said one or more databases (218-226).

6. A method according to any preceding claim, comprising holding subscriber records for a plurality of subscribers in said routing data store (212), said subscriber records each holding a predetermined selection of data.

7. A method according to any preceding claim, comprising controlling said customer services call routing function prior to any interaction with said subscriber in said customer services resource.

8. A method according to any preceding claim, comprising identifying said subscriber using a calling line identity (304), and looking up a subscriber record in response to said identification to access said selected data.

9. A method according to any preceding claim, wherein said plurality of databases (218-226) comprises a database providing a subscription management function (226).

10. A method according to any preceding claim, wherein said plurality of databases (218-226) comprises a database providing a billing function (222).

11. A method according to any preceding claim, wherein said plurality of databases (218-226) comprises a database providing a mobile subscriber authentication function, such as a Home Location Register (218) or a Visitor Location Register (220).

12. A method according to any preceding claim, wherein said plurality of databases (218-226) comprises a database providing a mobile subscriber equipment identification function (224).

13. A method according to any preceding claim, wherein said selected data comprises data defining a start or end date of a subscription (402, 404) held by the subscriber and said customer services call routing function is controlled differently in dependence on the start or end date of the subscription (402, 404).

14. A method according to any preceding claim, wherein said selected data comprises data defining a credit status of the subscriber (410) and said customer services call routing function is controlled differently in dependence on the credit status of the subscriber (410).

15. A method according to any preceding claim, wherein said selected data comprises data defining an attribute of billing generated for the subscriber (412, 414) and said customer services call routing function is controlled differently in dependence on the attribute of billing generated for the subscriber (412, 414).

16. A method according to any preceding claim, wherein said selected data comprises data defining a level of priority of service to be provided to the subscriber (408) and said customer services call routing function is controlled differently in dependence on the level of priority of service to be provided to the subscriber (408).

17. A method according to any preceding claim, wherein said selected data comprises data defining a characteristic of a subscription held by the subscriber (406) and said customer services call routing function is controlled differently in dependence on said characteristic of said subscription (406).

18. A method according to any preceding claim, wherein said selected data includes information about the subscriber's home network (416) and said customer services call routing function is controlled differently for home network subscribers and roaming network subscribers.

19. A method according to any preceding claim, wherein said selected data comprises data indicating a characteristic of the equipment used by the subscriber, and said customer services call routing function is controlled differently dependent on the data indicating a characteristic of the equipment used by the subscriber.

20. A method according to claim 19, wherein said data indicating a characteristic indicates a current location of the subscriber equipment (418).

21. A method according to claim 19 or 20, wherein said data indicating a characteristic indicates a type of subscriber equipment (420).

## Patentansprüche

1. Verfahren zur Behandlung eines Anrufs von einem Teilnehmer in einem Mobilfunknetz, wobei der Anruf an ein Kundendienstbetriebsmittel im Mobilfunknetz gerichtet ist, wobei das Verfahren Folgendes aufweist:
Implementieren einer Kundendienst-Rufweglenkungsfunktion, wobei die Rufweglenkungsfunktion so gesteuert wird, dass sie eines von mehreren verschiedenen Weglenkungsfunktionsergebnissen erzeugt, welche jeweils eine Weglenkung eines Anrufs von einem Teilnehmer zu einem anderen Rufweglenkungsziel umfassen, wobei das Verfahren die folgenden Schritte aufweist:
Ableiten von ausgewählten Daten von mehreren Datenbanken (218 - 226) des Mobilfunknetzes, die Teilnehmerdaten enthalten, wobei die mehreren Datenbanken (218 - 226) in erster Linie mit anderen Funktionen als Weglenkungsfunktionen des Mobilfunknetzes in Beziehung stehen;
Befüllen von Teilnehmerdatensätzen (400 - 422) in einem Weglenkungsdatenspeicher (212) mit den ausgewählten Daten vor dem Empfang eines Anrufs von einem Teilnehmer;
Abfragen des Weglenkungsdatenspeichers (212) als Reaktion auf den Empfang des Anrufs von einem Teilnehmer;
Erzeugen einer Sonderbehandlungsanweisung für den Anruf von einem Teilnehmer, wenn ein Teilnehmerdatensatz, der ausgewählte Daten aufweist, die von den mehreren Datenbanken (218 - 226) abgeleitet und für den Teilnehmer im Weglenkungsdatenspeicher (212) gespeichert sind, einen Bedarf an einer Sonderbehandlung des Anrufs des Teilnehmers anzeigt;
derartiges Steuern der Kundendienst-Rufweglenkungsfunktion für den Anruf von einem Teilnehmer, dass sie ein Sonderbehandlungs-Weglenkungsfunktionsergebnis als Reaktion auf die Erzeugung der Sonderbehandlungsanweisung auswählt.

2. Verfahren nach Anspruch 1, wobei der Weglenkungsdatenspeicher (212) am Ort des Kundendienstbetriebsmittels ist.

3. Verfahren nach Anspruch 1 oder 2, aufweisend ein Ableiten der ausgewählten Daten, und Befüllen der Teilnehmerdatensätze, von Daten, die für den Teilnehmer in mehreren Datenbanken (218 - 226) gespeichert sind, vor dem Empfang des Anrufs.

4. Verfahren nach Anspruch 1, 2 oder 3, wobei die ausgewählten Daten für eine Kundendienst-Rufweglenkungsfunktion bestimmt sind, wenn im Speicher (212) enthalten.

5. Verfahren nach einem der vorhergehenden Ansprüche, aufweisend ein Verwenden eines automatischen Bereitstellungsmittels (214), um die ausgewählten Daten als Reaktion auf Änderungen der Teilnehmerdaten, die in der einen oder den mehreren Datenbanken (218 - 226) gespeichert sind, zu aktualisieren.

6. Verfahren nach einem der vorhergehenden Ansprüche, aufweisend ein Speichern von Teilnehmerdatensätzen für mehrere Teilnehmer im Weglenkungsdatenspeicher (212), wobei die Teilnehmerdatensätze jeweils eine vorbestimmte Auswahl von Daten enthalten.

7. Verfahren nach einem der vorhergehenden Ansprüche, aufweisend ein Steuern der Kundendienst-Rufweglenkungsfunktion vor jeglicher Interaktion mit dem Teilnehmer im Kundendienstbetriebsmittel.

8. Verfahren nach einem der vorhergehenden Ansprüche, aufweisend ein Identifizieren des Teilnehmers unter Verwendung einer Teilnehmeranschlussnummer (304) und Nachschlagen eines Teilnehmerdatensatzes als Reaktion auf die Identifizierung, um auf die ausgewählten Daten zuzugreifen.

9. Verfahren nach einem der vorhergehenden Ansprüche, wobei die mehreren Datenbanken (218 - 226) eine Datenbank aufweisen, die eine Subskriptionsverwaltungsfunktion (226) bereitstellt.

10. Verfahren nach einem der vorhergehenden Ansprüche, wobei die mehreren Datenbanken (218 - 226) eine Datenbank aufweisen, die eine Vergebührungsfunktion (222) bereitstellt.

11. Verfahren nach einem der vorhergehenden Ansprüche, wobei die mehreren Datenbanken (218 - 226) eine Datenbank aufweisen, die eine Mobilfunkteilnehmer-Authentifizierungsfunktion, wie beispielsweise ein Heimatregister (218) oder ein Besucherregister (220), bereitstellt.

12. Verfahren nach einem der vorhergehenden Ansprüche, wobei die mehreren Datenbanken (218 - 226) eine Datenbank aufweisen, die eine Mobilfunkteilnehmergeräte-Identifizierungsfunktion (224) bereitstellt.

13. Verfahren nach einem der vorhergehenden Ansprüche, wobei die ausgewählten Daten Daten aufweisen, die ein Anfangs- oder Enddatenelement einer Subskription (402, 404) definieren, die der Teilnehmer besitzt, und die Kundendienst-Rufweglenkungsfunktion in Abhängigkeit vom Anfangs- oder Enddatenelement der Subskription (402, 404) unterschiedlich gesteuert wird.

14. Verfahren nach einem der vorhergehenden Ansprüche, wobei die ausgewählten Daten Daten aufweisen, die einen Kreditstatus des Teilnehmers (410) definieren, und die Kundendienst-Rufweglenkungsfunktion in Abhängigkeit vom Kreditstatus des Teilnehmers (410) unterschiedlich gesteuert wird.

15. Verfahren nach einem der vorhergehenden Ansprüche, wobei die ausgewählten Daten Daten aufweisen, die ein für den Teilnehmer erzeugtes Vergebührungsattribut (412, 414) definieren, und die Kundendienst-Rufweglenkungsfunktion in Abhängigkeit von dem für den Teilnehmer erzeugten Vergebührungsattribut (412, 414) unterschiedlich gesteuert wird.

16. Verfahren nach einem der vorhergehenden Ansprüche, wobei die ausgewählten Daten Daten aufweisen, die eine für den Teilnehmer bereitzustellende Dienstprioritätsstufe (408) definieren, und die Kundendienst-Rufweglenkungsfunktion in Abhängigkeit von der für den Teilnehmer bereitzustellenden Dienstprioritätsstufe (408) unterschiedlich gesteuert wird.

17. Verfahren nach einem der vorhergehenden Ansprüche, wobei die ausgewählten Daten Daten aufweisen, die eine Charakteristik einer vom Teilnehmer besessenen Subskription (406) definieren, und die Kundendienst-Rufweglenkungsfunktion in Abhängigkeit von der Charakteristik der Subskription (406) unterschiedlich gesteuert wird.

18. Verfahren nach einem der vorhergehenden Ansprüche, wobei die ausgewählten Daten Informationen über das Heimatnetz des Teilnehmers (416) aufweisen, und die Kundendienst-Rufweglenkungsfunktion für Heimatnetzteilnehmer und Gastnetzteilnehmer unterschiedlich gesteuert wird.

19. Verfahren nach einem der vorhergehenden Ansprüche, wobei die ausgewählten Daten Daten aufweisen, die eine Charakteristik des vom Teilnehmer verwendeten Geräts anzeigen, und die Kundendienst-Rufweglenkungsfunktion in Abhängigkeit von den Daten, die eine Charakteristik des vom Teilnehmer verwendeten Geräts anzeigen, unterschiedlich gesteuert wird.

20. Verfahren nach Anspruch 19, wobei die Daten, die eine Charakteristik anzeigen, einen aktuellen Standort des Teilnehmergeräts (418) anzeigen.

21. Verfahren nach Anspruch 19 oder 20, wobei die Daten, die eine Charakteristik anzeigen, einen Typ des Teilnehmergeräts (420) anzeigen.

## Revendications

1. Procédé de traitement d'appel d'un abonné dans un réseau de télécommunication mobile, l'appel étant destiné à une ressource de service à la clientèle située dans le réseau de télécommunication mobile, ledit procédé comprenant les étapes suivantes :
mettre en oeuvre une fonction de routage d'appel à un service à la clientèle, ladite fonction de routage d'appel étant commandée afin de générer un résultat parmi une pluralité de différents résultats de fonction de routage qui consistent chacun à router un appel d'un abonné vers une destination de routage d'appel différente, le procédé comprenant les étapes consistant à :
dériver des données sélectionnées à partir d'une pluralité de bases de données (218-226) du réseau de télécommunication mobile contenant des données d'abonné, ladite pluralité de bases de données (218-226) concernant essentiellement des fonctions autres que des fonctions de routage du réseau de télécommunication mobile ;
charger lesdites données sélectionnées dans les enregistrements d'abonné (400-422) d'un magasin de données de routage (212), avant de recevoir un appel d'un abonné ;
interroger ledit magasin de données de routage (212) en réponse à la réception dudit appel d'un abonné ;
générer une instruction de traitement spécial pour ledit appel d'un abonné si un enregistrement d'abonné comprenant des données sélectionnées dérivées à partir de la pluralité de bases de données (218-226) stockées pour l'abonné dans le magasin de données de routage (212) indique un besoin de traitement spécial de l'appel de l'abonné ;
commander ladite fonction de routage d'appel à un service à la clientèle pour ledit appel d'un abonné afin de sélectionner un résultat de fonction de routage de traitement spécial en réponse à la génération de ladite instruction de traitement spécial.

2. Procédé selon la revendication 1, dans lequel ledit magasin de données de routage (212) est local par rapport à ladite ressource de service à la clientèle.

3. Procédé selon la revendication 1 ou 2, consistant à dériver lesdites données sélectionnées, et charger dans lesdits enregistrements d'abonné les données stockées pour l'abonné dans une pluralité desdites bases de données (218-226), avant de recevoir ledit appel.

4. Procédé selon la revendication 1, 2 ou 3 dans lequel lesdites données sélectionnées sont dédiées à une fonction de routage d'appel à un service à la clientèle lorsqu'elles sont stockées dans ledit magasin (212).

5. Procédé selon l'une quelconque des revendications précédentes, consistant à utiliser un moyen de provisionnement automatisé (214) pour mettre à jour lesdites données sélectionnées en réponse aux modifications des données d'abonné stockées dans lesdites une ou plusieurs bases de données (218-226).

6. Procédé selon l'une quelconque des revendications précédentes, consistant à stocker des enregistrements d'abonné pour une pluralité d'abonnés dans ledit magasin de données de routage (212), lesdits enregistrements d'abonné contenant chacun une sélection prédéterminée de données.

7. Procédé selon l'une quelconque des revendications précédentes, consistant à commander ladite fonction de routage d'appel à un service à la clientèle avant toute interaction avec ledit abonné dans ladite ressource de service à la clientèle.

8. Procédé selon l'une quelconque des revendications précédentes, consistant à identifier ledit abonné à l'aide d'une identité de ligne d'appel (304), et consulter un enregistrement d'abonné en réponse à ladite identification pour accéder auxdites données sélectionnées.

9. Procédé selon l'une quelconque des revendications précédentes, dans lequel ladite pluralité de bases de données (218-226) comprend une base de données fournissant une fonction de gestion d'abonnement (226).

10. Procédé selon l'une quelconque des revendications précédentes, dans lequel ladite pluralité de bases de données (218-226) comprend une base de données fournissant une fonction de facturation (222).

11. Procédé selon l'une quelconque des revendications précédentes, dans lequel ladite pluralité de bases de données (218-226) comprend une base de données fournissant une fonction d'authentification d'abonné mobile, telle qu'un registre des abonnés nominaux (218) ou un registre de localisation des visiteurs (220).

12. Procédé selon l'une quelconque des revendications précédentes, dans lequel ladite pluralité de bases de données (218-226) comprend une base de données fournissant une fonction d'identification d'équipement d'abonné mobile (224).

13. Procédé selon l'une quelconque des revendications précédentes, dans lequel lesdites données sélectionnées comprennent des données définissant une date de début ou de fin d'un abonnement (402, 404) détenu par l'abonné et ladite fonction de routage d'appel à un service à la clientèle est commandée différemment en fonction de la date de début ou de fin de l'abonnement (402, 404).

14. Procédé selon l'une quelconque des revendications précédentes, dans lequel lesdites données sélectionnées comprennent des données définissant un état de crédit de l'abonné (410) et ladite fonction de routage d'appel à un service à la clientèle est commandée différemment en fonction de l'état de crédit de l'abonné (410).

15. Procédé selon l'une quelconque des revendications précédentes, dans lequel lesdites données sélectionnées comprennent des données définissant un attribut de facturation généré pour l'abonné (412, 414) et ladite fonction de routage d'appel à un service à la clientèle est commandée différemment en fonction de l'attribut de facturation généré pour l'abonné (412, 414).

16. Procédé selon l'une quelconque des revendications précédentes, dans lequel lesdites données sélectionnées comprennent des données définissant un niveau de priorité de service à fournir à l'abonné (408) et ladite fonction de routage d'appel à un service à la clientèle est commandée différemment en fonction du niveau de priorité de service à fournir à l'abonné (408).

17. Procédé selon l'une quelconque des revendications précédentes, dans lequel lesdites données sélectionnées comprennent des données définissant une caractéristique d'un abonnement détenu par l'abonné (406) et ladite fonction de routage d'appel à un service à la clientèle est commandée différemment en fonction de ladite caractéristique dudit abonnement (406).

18. Procédé selon l'une quelconque des revendications précédentes, dans lequel lesdites données sélectionnées comportent des informations concernant le réseau domestique de l'abonné (416) et ladite fonction de routage d'appel à un service à la clientèle est commandée différemment pour les abonnés du réseau domestique et les abonnées du réseau d'itinérance.

19. Procédé selon l'une quelconque des revendications précédentes, dans lequel lesdites données sélectionnées comprennent des données indiquant une caractéristique de l'équipement utilisé par l'abonné, et ladite fonction de routage d'appel à un service à la clientèle est commandée différemment en fonction des données indiquant une caractéristique de l'équipement utilisé par l'abonné.

20. Procédé selon la revendication 19, dans lequel lesdites données indiquant une caractéristique désignent un emplacement courant de l'équipement d'abonné (418).

21. Procédé selon la revendication 19 ou 20, dans lequel lesdites données indiquant une caractéristique désignent un type d'équipement d'abonné (420).
